(19) Europäisches Patentamt
European Patent Office
Office européen des brevets

(11) **EP 1 813 448 B1**

(12) **FASCICULE DE BREVET EUROPEEN**

(45) Date de publication et mention
de la délivrance du brevet:
**09.01.2013 Bulletin 2013/02**

(51) Int Cl.:
*B60C 23/04* (2006.01)   *G07C 5/08* (2006.01)

(21) Numéro de dépôt: **07100535.9**

(22) Date de dépôt: **15.01.2007**

(54) **Pneumatique, roue ou ensemble pneumatique et roue équipés d'un dispositif de comptage du nombre de rotations.**

Reifen, Rad oder Reifen-Rad-Einheit, welche mit einer Vorrichtung zur Drehzahlerfassung ausgestattet sind

Tyre, wheel or tyre and wheel assembly equipped with a device for counting the number of rotations.

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.01.2006 FR 0600872**

(43) Date de publication de la demande:
**01.08.2007 Bulletin 2007/31**

(73) Titulaires:
• **COMPAGNIE GENERALE DES ETABLISSEMENTS MICHELIN**
**63000 Clermont-Ferrand (FR)**
• **Michelin Recherche et Technique S.A.**
**1763 Granges-Paccot (CH)**

(72) Inventeurs:
• **Beranger, Marc**
**38410 Saint Martin d'Uriage (FR)**
• **Daumas, Franck**
**63830 Nohanent (FR)**
• **Liberge, Franck**
**63830 Durtol (FR)**
• **Penot, Thierry**
**63000 Clermont-Ferrand (FR)**
• **Vial, Franck**
**38850 Paladru (FR)**
• **Villard, Marie-José**
**63200 Riom (FR)**

(74) Mandataire: **Dequire, Philippe Jean-Marie Denis**
**M.F.P. Michelin,**
**SGD/LG/PI-F35-Ladoux,**
**23, place des Carmes Déchaux**
**63040 Clermont-Ferrand Cedex 09 (FR)**

(56) Documents cités:
**WO-A-2004/110793    WO-A1-2007/003766**
**US-A- 6 087 930**

**Description**

L'invention concerne un ensemble pneumatique et roue équipé d'un dispositif électronique de comptage du nombre de ses rotations.

On utilise de plus en plus fréquemment de nos jours des dispositifs électroniques de contrôle des systèmes mécaniques, par exemple pour obtenir un suivi du fonctionnement de ceux-ci.

Dans cet ordre d'idée, on utilise des dispositifs qui dénombrent les rotations effectuées par un objet mobile autour d'un axe, tel qu'une roue d'un véhicule, afin d'assurer un suivi de l'utilisation du pneumatique porté par la roue.

Une telle solution est décrite dans la demande de brevet WO 2004/110793, ainsi que la demande WO 2007/003766.

Dans de tels dispositifs électroniques, le nombre de rotations de l'objet est mémorisé sous la forme d'une information de comptage, par exemple dans une mémoire du dispositif.

Pour pratique qu'elle soit, cette solution base sa fonction de contrôle (c'est-à-dire de suivi correct du système mécanique) sur l'exactitude de l'information de comptage mémorisée et est donc vulnérable lorsque cette information risque d'être altérée, par exemple par un fraudeur qui chercherait à réduire (voire à annuler) le nombre de tours mémorisé par le dispositif.

Afin de répondre à ce problème, l'invention propose un pneumatique, une roue ou un ensemble pneumatique et roue équipés d'un dispositif électronique de comptage du nombre de rotations dans lequel un moyen de mémorisation retient une information de comptage destinée à représenter le nombre de rotations compté à chaque instant, caractérisé par des moyens pour assurer l'absence de remise à zéro du moyen de mémorisation depuis un instant prédéterminé et ainsi assurer que l'information de comptage (NbRot) est représentative du nombre de rotations comptées depuis l'instant prédéterminé.

L'information de comptage peut ainsi être utilisée pour le suivi du nombre de rotations depuis l'instant prédéterminé avec un meilleur degré de certitude.

On évite ainsi d'utiliser l'information de comptage pour le suivi du nombre de rotations depuis l'instant prédéterminé après une remise à zéro intempestive (volontaire ou non) du moyen de mémorisation.

On entend ici *«remise à zéro»* dans le sens général, à savoir toute modification à une valeur antérieure de l'information mémorisée, même si cette valeur n'est pas nulle.

Selon un premier mode de réalisation, les moyens pour assurer l'absence de remise à zéro comprennent des moyens de remise à zéro conditionnelle du moyen de mémorisation.

On évite ainsi les remises à zéro intempestives, la mise en oeuvre d'une remise à zéro autorisée nécessitant un contexte particulier *(i.e.* au moins une condition particulière).

Lesdits moyens de remise à zéro conditionnelle sont par exemple aptes à remettre à zéro le moyen de mémorisation si et seulement si au moins deux conditions distinctes sont réalisées.

Lorsque le dispositif comprend des moyens de réception d'une requête d'émission de données, une première desdites conditions peut consister en la réception de ladite requête.

Lorsque le dispositif comprend un micro circuit, une seconde desdites conditions peut consister en l'application d'une tension prédéterminée sur une broche du microcircuit.

Selon un second mode de réalisation, éventuellement combinable au premier, les moyens pour assurer l'absence de remise à zéro comprennent des moyens de comptage du nombre de remises à zéro du moyen de mémorisation.

On a ainsi accès au nombre de remises à zéro intempestives, une seule remise à zéro étant généralement autorisée dans la vie du dispositif.

Les moyens de comptage sont par exemple aptes à mémoriser le nombre de remises à zéro dans une mémoire non-volatile, ce qui permet de conserver ce nombre même en cas de coupure de l'alimentation du dispositif.

Selon un autre mode de réalisation, on peut faire en sorte qu'un composant fusible du microcircuit soit « grillé » à chaque remise à zéro rendant le dispositif inutilisable après un nombre défini de remises à zéro correspondant à autant de composants fusibles présents dans le microcircuit, cela rend visible sur le dispositif le nombre de remises à zéro du dispositif.

Lorsque le dispositif comprend des moyens d'émission de données, les moyens d'émission sont aptes par exemple à émettre une information relative au nombre de remises à zéro, ce qui permet à cette information d'être suivie depuis l'extérieur.

Le dispositif peut également comprendre des moyens d'initialisation du dispositif aptes à remettre à zéro le moyen de mémorisation audit instant prédéterminé, selon une procédure de fonctionnement normale et autorisée.

Dans ce cas, les moyens d'initialisation sont par exemple aptes à mémoriser un code prédéterminé dans une première partie d'une mémoire vive, alors qu'une seconde partie de la mémoire vive peut former le moyen de mémorisation.

Selon un troisième mode de réalisation, éventuellement compatible avec au moins un des deux premiers, les moyens pour assurer l'absence de remise à zéro comprennent des moyens de vérification de la présence du code prédéterminé dans la première partie de mémoire vive.

On peut ainsi détecter la remise à zéro intempestive du moyen de mémorisation.

Des moyens d'émission de l'information de comptage sont alors par exemple aptes à émettre cette information seulement en cas de vérification positive par les moyens de vérification, ce qui permet de n'émettre l'information que lorsque sa fiabilité est assurée par les moyens de vérification.

Selon un quatrième mode de réalisation, éventuellement compatible avec l'un ou plusieurs des trois autres, un moyen de renforcer le degré de certitude de l'information comptage, consiste à n'autoriser une remise à zéro du moyen de mémorisation que par l'intermédiaire d'une requête spécifique cryptée émise par un dispositif extérieur au dispositif électronique de comptage du nombre de rotations et apte à communiquer avec lui. De préférence, la clé de cryptage de l'algorithme de cryptage se trouve dans le dispositif extérieur. Cela rend plus difficile son identification et son étude par un utilisateur usuel des véhicules.

En complément, le dispositif électronique de comptage peut crypter l'information de comptage du nombre de rotations avec le même algorithme de cryptage. C'est le dispositif extérieur qui, après émission d'une requête, reçoit et traite l'information de comptage du nombre de rotations.

De façon préférentielle, le dispositif de comptage est porté par le pneumatique et non par la roue. Le nombre de rotations enregistré par le dispositif correspond alors de façon irréfutable au pneumatique quel que soit le nombre de montages et de démontages qu'il aura subit.

L'invention a aussi pour objet l'utilisation pour l'équipement et la caractérisation d'un pneumatique, d'une roue ou d'un ensemble pneumatique et roue d'un dispositif électronique de comptage du nombre de rotations d'un objet dans un référentiel, dans lequel un moyen de mémorisation (10) du dispositif de comptage retient une information de comptage (NbRot) destinée à représenter le nombre de rotations comptées à chaque instant, ledit dispositif étant caractérisé en ce que le dispositif de comptage comporte des moyens pour assurer que l'information de comptage (NbRot) est représentative du nombre de rotations comptées depuis un instant prédéterminé.

Selon un autre aspect, l'invention a pour objet un dispositif électronique de comptage du nombre de rotations d'un objet dans un référentiel, comprenant un capteur magnétique relié à des moyens de comptage et des moyens de réception de signaux extérieurs, caractérisé en ce que les moyens de réception des signaux extérieurs sont constitués par une antenne électromagnétique comprenant le capteur magnétique.

L'invention a aussi pour objet l'utilisation pour l'équipement et la caractérisation d'un pneumatique, d'une roue ou d'un ensemble pneumatique et roue d'un dispositif électronique de comptage du nombre de rotations d'un objet dans un référentiel selon l'invention ainsi qu'un pneumatique, une roue ou un ensemble pneumatique et roue équipé d'un tel dispositif.

De façon préférentielle, le capteur magnétique est une bobine.

Le capteur magnétique peut être relié aux moyens de comptage par un filtre basse fréquence.

Le dispositif comportant un microcontrôleur relié audits moyens de comptage, l'antenne électromagnétique est reliée au microcontrôleur par un filtre haute fréquence.

D'autres caractéristiques de l'invention apparaîtront mieux à la lumière de la description qui suit, faite en référence aux dessins annexés dans lesquels :

- la figure 1 représente le schéma général d'un dispositif de comptage selon l'invention;
- la figure 2 représente un exemple détaillé d'une partie du dispositif de la figure 1 ;
- la figure 3 représente le comportement fréquentiel global d'une partie du circuit représenté à la figure 2 ;
- la figure 4 représente le dispositif de la figure 1 et un dispositif de surveillance apte à communiquer avec lui ; et
- la figure 5 est une vue en coupe méridienne d'un pneumatique muni, de façon illustrative, de plusieurs dispositifs de comptage des rotations disposés sur ses surfaces interne et externe.

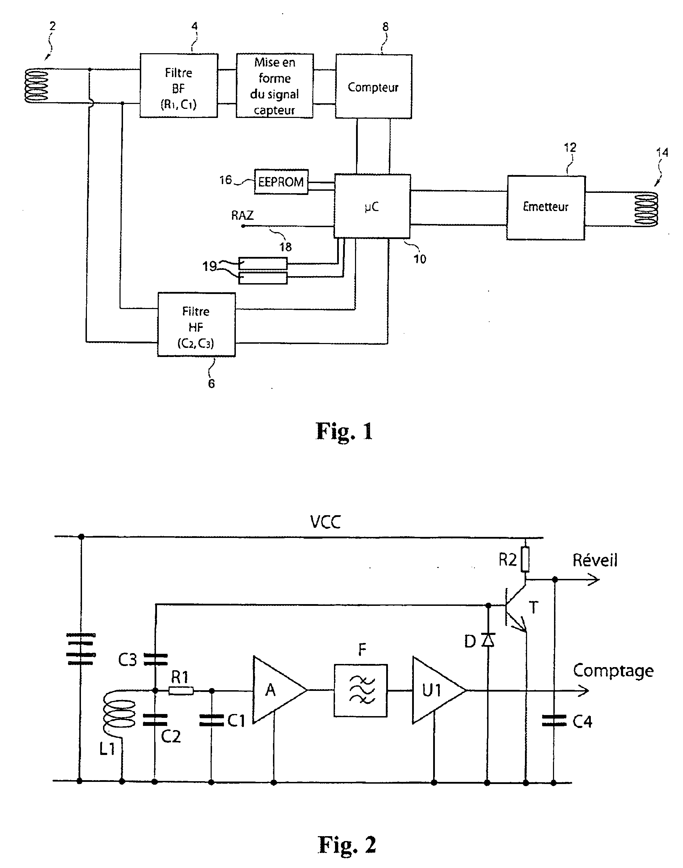

La figure 1 représente les éléments essentiels d'un·dispositif de comptage des rotations d'un objet dans un référentiel réalisé conformément aux enseignements de l'invention.

Il s'agit par exemple d'un dispositif autonome embarqué dans un pneumatique dans le but de compter le nombre de tours de roues effectués par le pneumatique afin d'avoir une indication sur son état d'usure.

Le dispositif de comptage représenté à la figure 1 comprend un capteur magnétique 2 réalisé en pratique par une bobine, c'est-à-dire un enroulement conducteur formé d'une spire ou d'une pluralité de spires.

Le signal généré par le capteur 2 est transmis d'une part à un compteur 8, à travers un filtre basse fréquence 4 (dénommé dans la suite filtre BF) puis éventuellement un circuit de mise en forme du signal, et d'autre part à des bornes de réception d'un microcontrôleur 10 à travers un filtre haute fréquence 6 comme décrit en détail dans la suite.

Le filtre BF 4 est conçu pour ne transmettre du capteur magnétique 2 au compteur 8 que les signaux représentatifs du mouvement à mesurer (c'est-à-dire ici les signaux générés à la fréquence de rotation de l'objet, par la rotation du capteur magnétique 2 dans le champ magnétique terrestre).

Pour ce faire, le filtre BF 4 présente une impédance élevée en dehors de la plage de fréquences qui correspond aux signaux de mesure.

Par exemple, dans le cas évoqué ici de la mesure des rotations d'un pneumatique, vues les vitesses de rotation courantes des roues de véhicules les signaux générés par la rotation dans le champ magnétique terrestre ont des fréquences variant entre 1 Hz et quelques dizaines de Hz.

On prévoit donc, dans ce cas, une impédance élevée du filtre BF 4 à partir d'une fréquence supérieure à 100 Hz par exemple à partir de 1 kHz.

Le compteur 8 a pour fonction de compter le nombre d'alternances dans le signal généré par le capteur magnétique 2 du fait de sa rotation dans le champ magnétique terrestre, c'est-à-dire dans le signal transmis par le filtre BF 4.

Le compteur 8 décompte par exemple un nombre prédéterminé d'alternances (par exemple 4096 alternances) dans le signal qu'il reçoit du filtre BF 4, puis transmet une information de dépassement à un microcontrôleur 10 lorsque le nombre prédéterminé est atteint, et reprend alors le décompte du nombre prédéterminé d'alternances.

Le microcontrôleur 10 incrémente un registre interne à chaque réception de l'information de dépassement et mémorise ainsi le nombre cumulé d'informations de dépassement reçues, qui représente donc (à un facteur multiplicatif près) le nombre d'alternances dans le signal issu du filtre BF 4.

On a ainsi facilement accès au nombre de rotations du dispositif de comptage (et de manière équivalente du capteur magnétique 2 qui lui est solidaire) dans le champ magnétique terrestre.

On pourra sur ce sujet se référer à la demande de brevet WO 2004/110793 qui décrit également certains des aspects qui viennent d'être évoqués.

Comme déjà indiqué, la bobine 2 est par ailleurs connectée à un filtre haute fréquence 6 (dénommé dans la suite filtre HF). Ce filtre HF 6 est conçu de manière à présenter une impédance élevée dans les domaines fréquentiels des signaux utilisés pour la mesure (ici pour le comptage des rotations), c'est-à-dire les signaux transmis de la bobine 2 au compteur 8 par le filtre BF 4, de telle sorte que le filtre HF 6 ne transmet de la bobine 2 aux bornes de réception du microcontrôleur 10 que les signaux de fréquence supérieure à une fréquence donnée (par exemple de l'ordre de 1 kHz), ou dans une bande de fréquence dont la limite inférieure correspond à cette fréquence donnée.

Le filtre BF 4 et le filtre HF 6 ont donc des bandes passantes distinctes (par exemple de part et d'autre de 1 kHz), ce qui permet, à partir de la bobine 2, de ne transmettre que les signaux dans une première bande de fréquence au compteur 8 et que les signaux dans une seconde bande de fréquence aux bornes de réception de microcontrôleur 10.

Dans la seconde bande de fréquence (située ici au-dessus de 1 kHz, par exemple autour de 50 kHz avec une bande passante de quelques kHz, par exemple 5 kHz, ce qui correspond à un coefficient de surtension de 1 0), la bobine 2 se comporte comme une antenne électromagnétique.

On permet ainsi la réception, par la bobine 2 et à travers le filtre HF 6, d'un signal radiofréquence par le microcontrôleur 10 au niveau de ses bornes de réception.

On peut ainsi transmettre des informations au dispositif de comptage (c'est-à-dire en pratique à son microcontrôleur 10) par télécommunication au moyen d'ondes électromagnétiques (par exemple sur une porteuse à 50 kHz dans l'exemple mentionné ci-dessus).

Il s'agit·notamment d'une information de réveil transmise par un dispositif extérieur (typiquement un dispositif du système électronique du véhicule ou autre dispositif de surveillance de l'état d'usure des pneumatiques) ; cette information de réveil indique au dispositif de comptage (en pratique à son microcontrôleur 10) que ce dernier doit émettre une information représentative du mouvement mesuré cumulé (c'est-à-dire du nombre de rotations effectuées) comme décrit ci-après.

Pour ce faire, le dispositif de comptage de la figure 1 comprend également un émetteur 12 en liaison électrique avec le microcontrôleur 10 et une antenne d'émission 14, réalisée par exemple elle aussi sous forme d'un enroulement conducteur.

Ainsi, lorsqu'il reçoit une information de réveil au moyen de la bobine 2 faisant fonction d'antenne électromagnétique de réception, mais éventuellement aussi dans d'autres phases de son fonctionnement, le microcontrôleur 10 transmet à l'émetteur 12 des informations à émettre (telles que le nombre cumulé des informations de dépassement reçues, qui comme déjà indiqué est représentatif du nombre de rotations effectuées par le pneumatique).

L'émetteur 12 transforme alors ces informations (par exemple reçues par celui-ci sous forme d'un train binaire) en signaux électriques à émettre sous forme d'une onde électromagnétique par l'antenne d'émission 14, par exemple sur une porteuse à une fréquence d'émission (qui vaut 433,92 MHz dans le mode de réalisation décrit ici).

En résumé, le microcontrôleur 10 reçoit des informations de mesure générées par la bobine 2 aux fréquences où celle-ci se comporte comme un capteur magnétique (informations de mesure traitées par le compteur 8), et des informations en réception reçues par la bobine 2 dans les fréquences où elle se comporte comme une antenne électromagnétique.

L'utilisation du filtre BF 4 et du filtre HF 6 permet de limiter la transmission des signaux, respectivement au compteur et aux bornes de réception du microcontrôleur 10, aux seules plages de fréquence utiles dans chaque cas, c'est-à-dire respectivement les fréquences où apparaissent les signaux ou informations de mesure (en général en dessous de 100 Hz) et les fréquences de réception des signaux radiofréquences, c'est-à-dire typiquement entre 10kHz et 1 MHz.

Grâce à cette construction, la bobine 2 joue simultanément les rôles de capteur magnétique et d'antenne électromagnétique, sans que cela n'implique toutefois de problème pour le fonctionnement du circuit (tel que par exemple d'éventuels problèmes d'interférence entre ces deux fonctions).

Dans le dispositif de comptage de la figure 1, le microcontrôleur 10 est également relié à une mémoire non-volatile réinscriptible 16 (par exemple du type EEPROM, dénomination venant de l'anglais « *Electrically Erasable and Programmable Read Only Memory* »). Cette mémoire non-volatile 16 permet par exemple de stocker une information relative au nombre de remises à zéro qu'a subi le dispositif de comptage, ce qui constitue comme expliqué plus loin une mesure de protection contre d'éventuelles tentatives de fraude sur le nombre de tours décompté.

Le microcontrôleur 10 est aussi relié à des composants fusibles 19 dont le nombre correspond au nombre total de remises à zéro autorisées du dispositif avant de rendre celui-ci inutilisable.

La remise à zéro du nombre de tours décompté est ici conditionnelle afin d'éviter toute remise à zéro intempestive : le microcontrôleur 10 lance une procédure de remise à zéro autorisée du nombre de tours décomptés quand les deux conditions suivantes sont réunies :

- présence d'une tension électrique d'une valeur prédéterminée (par exemple supérieure à 3 V) sur une broche dédiée 18 du microcontrôleur 10 ; et
- réception d'une information de réveil au moyen de la bobine 2 et à travers le filtre HF 6 selon les modalités déjà mentionnées.

Lors de cette phase de remise à zéro autorisée, le dispositif extérieur qui émet l'information de réveil peut également transmettre un nombre prédéterminé ou code qui sera ainsi reçu par le microcontrôleur 10 (à travers la bobine 2 et le filtre HF 6), puis stocké par le microcontrôleur 10 dans la mémoire utilisée pour le stockage du nombre de tours décompté (ici la mémoire vive formée par les registres internes déjà mentionnés).

Le microcontrôleur 10 pourra alors vérifier la présence de cette information pour s'assurer que le contenu de la mémoire (qui comprend le nombre de tours décompté) n'a pas été réinitialisé ou corrompu (par exemple par un fraudeur qui souhaiterait remettre à zéro le nombre tours décompté). On peut alors prévoir que le microcontrôleur 10 ne déclenche l'émission des informations à émettre par l'émetteur 12 qu'à la condition qu'il vérifie au préalable la présence du code dans la mémoire.

En pratique, la vérification de la présence du code dans la mémoire peut par exemple être réalisée en transmettant, à partir du dispositif extérieur, le code en même temps que l'information de réveil déjà mentionnée ; le microcontrôleur 10 peut alors comparer le code reçu avec chaque information de réveil au code stocké en mémoire lors de la phase de remise à zéro autorisée et ainsi vérifier que la mémoire n'a pas subi d'altération.

Lorsque, selon un mode de réalisation particulier, le dispositif comporte les composants fusibles 19, à la suite d'un processus de remise à zéro, le microcircuit applique une tension prédéfinie aux bornes du composant fusible 19. Cette tension grille ce composant fusible, ce qui rend visible le nombre de remises à zéro dans le dispositif de comptage. D'autre part, lorsque tous les composants fusibles 19 sont grillés, le microcircuit 10 devient inutilisable.

On va à présent décrire en référence à la figure 2 un mode de réalisation possible pour la bobine 2, le filtre BF 4 et le filtre HF 6 qui viennent d'être décrits en référence à la figure 1.

Comme cela sera décrit dans la suite, la première partie du circuit électrique représentée à la figure 2 permet de réaliser d'autres fonctions que celles qui viennent d'être mentionnées, et notamment une mise en forme des signaux de mesure comme illustré en figure 1.

La bobine 2 est représentée sur le schéma électrique de la figure 2 par une inductance L1.

La bobine 2 est réalisée par l'enroulement de plusieurs milliers de spires (par exemple entre 1 000 et 10 000 spires, ici 3 000 spires) ayant chacune une surface de l'ordre de 10 mm$^2$ et réalisées en fil de cuivre isolé, ce qui lui confère une inductance de quelques dizaines de mH. On obtient ainsi une surface équivalente de l'ordre de quelques dm$^2$, voire de quelques dizaines de dm$^2$ (par exemple comprise entre 1 dm$^2$ et 1 m$^2$).

Avantageusement, les spires peuvent être bobinées sur un noyau à forte perméabilité magnétique, ce qui permet une amélioration de la sensibilité qui correspond à une multiplication de la surface équivalente, par exemple par un facteur compris entre 1 et 10, ici un facteur 6.

Ce dimensionnement de la bobine lui permet de constituer à basse fréquence un capteur magnétique avec une sensibilité de l'ordre de 1 V/Tesla à 1 Hz, qui génère ainsi à ses bornes une tension de l'ordre de 50 $\mu$V à 1 Hz lors de ses rotations dans le champ magnétique terrestre (en prenant pour ce dernier une valeur caractéristique de 50 $\mu$T).

Le dimensionnement de la bobine 2 lui permet également, du fait de sa capacité parasite C$_{parasite}$ qui vaut environ 40 pF, de constituer une antenne électromagnétique sensible en particulier autour de sa fréquence de résonance $f_0 = \dfrac{1}{2\pi}\sqrt{L1.C_{parasite}}$ , soit ici environ 100 kHz.

Comme visible sur la figure 2, les bornes de la bobine 2 (représentées par l'inductance L1) sont pour une première part reliées par l'association en série d'une résistance R1 et d'une capacité C1 qui forment un filtre passe-bas F1 avec une fréquence de coupure de 9 Hz. Ce filtre passe-bas F1 permet déjà la transmission des seuls signaux de mesure aux étages ultérieurs du circuit électronique décrits ci-après, même si d'autres filtres viennent renforcer cet effet comme également expliqué ci-dessous.

En effet, dans l'application considérée ici d'une mesure du nombre de rotations des roues de poids lourd (dont la vitesse maximum est de l'ordre 30 m/s et la circonférence parcourue par le capteur de l'ordre de 3 m), les signaux mesurés sont inférieurs à 10 Hz.

Après filtrage par le filtre passe-bas F1, les signaux (aux bornes du condensateur C1) sont appliqués à un étage de mise en forme comprenant par exemple un amplificateur A, un filtre passe-bande F et un comparateur U1. L'amplificateur peut avoir par exemple un gain de 100.

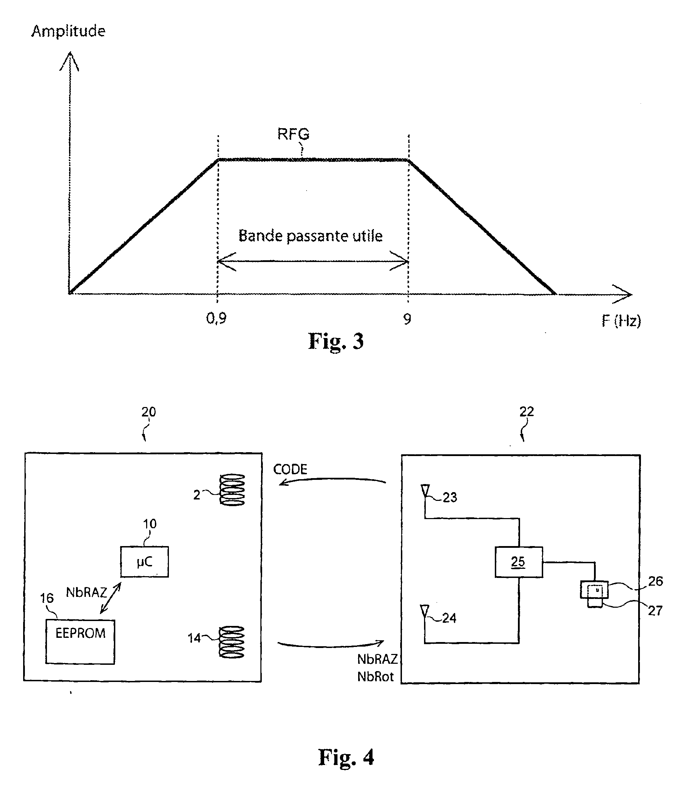

Comme bien visible sur la figure 3 qui représente le comportement fréquentiel de l'ensemble des éléments qui viennent d'être décrits, la réponse fréquentielle globale RFG de l'association de l'inductance L1, du filtre passe-bas F1 et de l'étage de mise en forme est située principalement entre 0,9 Hz et 9 Hz, qui constitue la plage de fréquence caractéristique des signaux à mesurer. (Ces fréquences correspondent, pour un poids lourd, à des vitesses comprises entre environ 10 km/h et 100 km/h.)

On remarque en outre que cette réponse fréquentielle globale RFG est pour l'essentiel plate sur cette plage de fréquence, ce qui simplifie grandement le traitement ultérieur des signaux générés en sortie.

Les signaux amplifiés par l'amplificateur A et transmis par le filtre passe-bande F sont appliqués au comparateur U1 qui réalise une fonction de détection des alternances du signal généré par la bobine 2 du fait de ses rotations dans le champ magnétique terrestre, après traitement comme décrit ci-dessus. Ce comparateur U1 génère ainsi des impulsions de comptage, en correspondance avec chacune des alternances du signal généré par la bobine 2, qui sont transmises au compteur 8.

Le circuit décrit plus haut (et notamment l'amplificateur A) permet de générer en sortie du filtre passe-bande F1 un signal qui permet le déclenchement du comparateur ; celui-ci délivre alors un signal logique, par exemple avec une amplitude de 3 V, compatible avec des circuits numériques.

Les bornes de la bobine 2 (représentées sur le circuit de la figure 2 par l'inductance L1) sont reliées pour une seconde part au moyen d'un condensateur C2 (par exemple de 100 pF) qui abaisse la fréquence de résonance de la bobine 2 (qui a une fréquence de résonance propre de l'ordre de 100 kHz comme vu ci-dessus) à environ 50 kHz. L'utilisation du condensateur C2 permet également de stabiliser la fréquence de résonance de l'ensemble à cette valeur de 50 kHz, la capacité parasite de la bobine 2 (d'environ 40 pF comme vu plus haut) ne permettant pas en pratique d'obtenir une valeur suffisamment stable de la fréquence de résonance.

Le signal aux bornes de l'ensemble inductance L1 - condensateur C2 est transmis à un transistor T par l'intermédiaire d'un condensateur C3 qui permet de ne laisser passer en direction du transistor T que les signaux à des fréquences supérieures à une valeur déterminée. Ainsi, le condensateur C3 forme un filtre passe-haut avec une fréquence de coupure inférieure ici à 50 kHz et qui forme le filtre HF de la figure 1.

Ainsi, lorsque l'amplitude crête des signaux hautes fréquences (ici à 50 kHz) aux bornes de la bobine dépasse 0,6 V (grâce à l'amplification générée naturellement par la résonance de l'ensemble à cette fréquence), le transistor T devient conducteur et sa tension émetteur-collecteur passe de 3 V à 0 V, ce qui constitue une information de réveil transmise au microcontrôleur 10.

Le dispositif de comptage est alimenté par une pile électrique, par exemple une pile délivrant une tension VCC de 3 V disponible sous la référence BR1632A.

On va à présent décrire en référence à la figure 4 différentes phases envisageables du fonctionnement du dispositif de comptage précédemment évoqué au cours desquelles celui-ci dialogue avec un dispositif extérieur comme déjà mentionné.

Le dispositif de comptage du nombre de rotation est représenté de manière générale en figure 4 sous la référence 20. Certains des éléments qui le constituent (à savoir la bobine 2, le microcontrôleur 10, l'antenne d'émission 14 et la mémoire non-volatile 16) sont également représentés schématiquement en figure 4 afin d'alléger cette figure. On pourra naturellement se reporter aux figures précédentes (en particulier la figure 1) pour une description détaillée de la constitution du dispositif de comptage 20.

Comme déjà évoqué, le dispositif de comptage 20 peut dialoguer avec un dispositif extérieur 22 (ici un dispositif de surveillance de l'utilisation des pneus, qui peut être réalisé en pratique sous la forme d'une borne ou d'un terminal dédié, ou encore sous la forme d'un dispositif embarqué dans un véhicule).

Le dispositif extérieur 22 comprend des moyens (typiquement une antenne) 23 pour émettre un signal électromagnétique à destination du dispositif de comptage 20 (et précisément de la bobine 2 dans ce dispositif). Le dispositif extérieur 22 comporte également des moyens (du type antenne) 24 pour recevoir les données émises par le dispositif de comptage 20 au moyen de son antenne d'émission 14.

Le dispositif extérieur 22 agit par exemple sous le contrôle général d'un microprocesseur 25. Selon une possibilité de réalisation utilisée comme expliqué dans la suite, le dispositif extérieur 22 peut en outre inclure un lecteur de carte à microcircuit 26 connecté au microprocesseur 25 et apte à lire des données stockées sur une carte à microcircuit 27.

On va à présent décrire à titre d'exemple différentes phases possibles du fonctionnement du dispositif de comptage 20.

Immédiatement après sa production et avant tout dialogue avec un dispositif extérieur 22, le dispositif de comptage 20 est par exemple initialisé comme suit : nombre de remises à zéro dans la vie du dispositif NbRAZ (mémorisé en mémoire non-volatile 16) : 0 ; nombre de rotations décomptées NbRot (mémorisé dans les registres du microcontrôleur) : 0.

Le dispositif de comptage peut éventuellement alors subir des déplacements et des mouvements, par exemple lors d'un éventuel transport de celui-ci avant son utilisation, ce qui entraîne éventuellement des risques de décompte (et donc d'incrémentation) du nombre de rotations décomptées NbRot sans correspondance avec une usure effective du système surveillé.

Il est donc souhaitable de remettre à zéro ce décompte avant la première utilisation effective de l'appareil surveillé, selon une procédure de remise à zéro autorisée.

Une telle procédure de remise à zéro autorisée est par exemple une procédure conditionnelle qui est mise en oeuvre lorsqu'au moins une condition précise est réalisée ; ici, deux conditions doivent être réalisées comme déjà décrit, à savoir la présence d'une valeur prédéterminée de tension sur une borne 18 du microcontrôleur 10 du dispositif de comptage 20 et- la réception d'une information de réveil générée par le dispositif extérieur 22.

Lors d'une telle procédure de remise à zéro autorisée (réalisée par exemple par une personne autorisée qui connaît la procédure à appliquer et possède une carte à microcircuit dédiée 27), le dispositif extérieur 22 émet non seulement l'information de réveil (qui permet dans les conditions précitées de déclencher la remise à zéro autorisée du dispositif de comptage 20), mais aussi un nombre CODE lu par exemple sur la carte à microcircuit 27 au moyen du lecteur de carte 26 et transmis ainsi sur instruction du microprocesseur 25 par l'intermédiaire des moyens d'émission 23. A réception de ce nombre CODE pendant la phase de remise à zéro autorisée, le micro contrôleur 10 du dispositif de comptage 20 mémorise ce nombre CODE dans ses registres internes (ou mémoire vive).

Par ailleurs, le microcontrôleur 10 incrémente alors la valeur du nombre de remises à zéro NbRAZ mémorisé en mémoire non-volatile 16.

Le dispositif de comptage 20 peut alors commencer son fonctionnement normal, à savoir principalement à décompter le nombre de rotations et à mémoriser une information NbRot représentative de ce nombre.

A une phase ultérieure du fonctionnement, le dispositif extérieur 22 peut souhaiter (en général sur demande d'un opérateur) prendre connaissance du nombre décompté dans le dispositif de comptage 20 selon les modalités déjà expliquées à propos de la figure 1.

Pour ce faire, le dispositif extérieur 22 émet au moyen de ses moyens d'émission 23 une information de réveil et le nombre CODE déjà émis lors de la remise à zéro du dispositif de comptage 20 (c'est-à-dire en pratique le nombre mémorisé dans la carte à microcircuit associée au dispositif de comptage 20).

A réception de l'information de réveil, le microcontrôleur 10 vérifie tout d'abord l'identité du nombre qu'il vient de recevoir en association avec l'information de réveil au nombre mémorisé lors de la phase de remise à zéro autorisée, afin de détecter une éventuelle perte des données dans ses registres internes.

En cas de différence entre le nombre reçu et le nombre mémorisé, on considère que les registres internes ont été corrompus (que ce soit le fait d'un fraudeur ou de manière fortuite) ; l'information relative au nombre de rotations décomptées est alors douteuse et ne sera pas émise : on s'abstient dans ce cas d'activer l'émetteur 12.

Si au contraire le nombre reçu avec l'information de réveil correspond précisément au nombre mémorisé lors de la remise à zéro autorisée, on procède à l'émission de l'information indicative du nombre de rotations NbRot et du nombre de remises à zéro subi par le dispositif de comptage NbRAZ, à destination du dispositif extérieur 22 et au moyen de l'émetteur 12 et de son antenne 14.

Le dispositif extérieur 22 peut alors vérifier que le dispositif de comptage a subi une et une seule remise à zéro, ce qui confère un caractère de fiabilité à l'information indicative du nombre de rotations également reçu.

En variante, la vérification qu'une et une seule remise à zéro du dispositif de comptage 20 a été réalisée peut être mise en oeuvre au sein même du dispositif de comptage ; on peut alors ici aussi empêcher l'émission de l'information indicative du nombre de rotations si une telle vérification n'est pas positive.

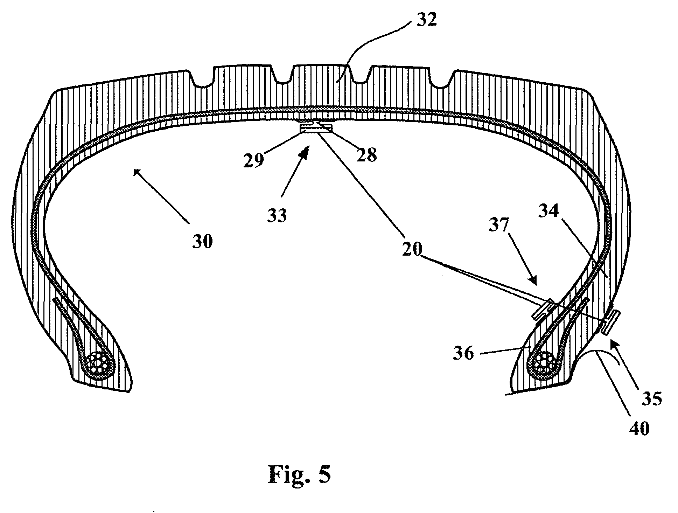

La figure 5 est une vue en coupe méridienne d'un pneumatique 30 monté sur une jante 40. Le pneumatique 30 comprend un sommet 32, deux flancs 34 et deux bourrelets 36. Les bourrelets 36 reposent sur les crochets 40 d'une jante (un seul crochet de la jante est représenté). Les dispositifs 20 peuvent notamment être disposé aux trois positions illustrées sur la figure 5 : sur la gomme intérieure du pneumatique entre le bourrelet 36 et le flanc 34 (position 37) ; sous le sommet 32 (position 33) et à l'extérieur du pneumatique au niveau du flanc 34 (position 35).

Les dispositifs 20 sont, à titre d'exemple, fixés sur la surface du pneumatique par l'intermédiaire d'un patch caoutchouteux 28 en forme générale de champignon et dont une surface est collée à la surface du pneumatique. Les boîtiers 29 des dispositifs 20 sont collés sur la surface extérieure du patch caoutchouteux. La forme de champignon permet de protéger les dispositifs des contraintes et déformations subies par cette surface du pneumatique.

Le mode de réalisation qui vient d'être décrit, et notamment les valeurs numériques indiquées, ne constituent qu'un exemple possible de mise en oeuvre de l'invention.

**Revendications**

1. Pneumatique, roue ou ensemble pneumatique et roue équipés d'un dispositif électronique de comptage du nombre de rotations, dans lequel un moyen de mémorisation (10) retient une information de comptage (NbRot) destinée à représenter le nombre de rotations comptées à chaque instant, **caractérisé**

**par** des moyens pour assurer l'absence de remise à zéro du moyen de mémorisation depuis un instant prédéterminé et ainsi assurer que l'information de comptage (NbRot) est représentative du nombre de rotations comptées depuis l'instant prédéterminé.

2. Pneumatique, roue ou ensemble selon la revendication 1, dans lequel les moyens pour assurer l'absence de remise à zéro comprennent des moyens de remise à zéro conditionnelle du moyen de mémorisation.

3. Pneumatique, roue ou ensemble selon la revendication 2, dans lequel, le dispositif comprenant des moyens de réception (26) d'une requête d'émission de données émise par un dispositif extérieur apte à communiquer avec ledit dispositif électronique de comptage, ladite requête destinée à produire une remise à zéro dudit dispositif est cryptée et la clé de cryptage est placée dans ledit dispositif extérieur.

4. Pneumatique, roue ou ensemble selon l'une des revendications 2 et 3, dans lequel lesdits moyens de remise à zéro conditionnelle sont aptes à remettre à zéro le moyen de mémorisation si et seulement si au moins deux conditions distinctes sont réalisées.

5. Pneumatique, roue ou ensemble selon la revendication 4, dans lequel, le dispositif comprenant des moyens de réception (26) d'une requête d'émission de données, une première desdites conditions consiste en la réception de ladite requête.

6. Pneumatique, roue ou ensemble selon l'une des revendications 4 et 5, dans lequel, le dispositif comprenant un microcircuit (10), une seconde desdites conditions consiste en l'application d'une tension prédéterminée sur une broche (18) du microcircuit (10).

7. Pneumatique, roue ou ensemble selon l'une des revendications 2 à 6, dans lequel les moyens pour assurer l'absence de remise à zéro comprennent des moyens de comptage du nombre de remises à zéro (NbRAZ) du moyen de mémorisation.

8. Pneumatique, roue ou ensemble selon la revendication 7, dans lequel les moyens de comptage sont aptes à mémoriser le nombre de remises à zéro (NbRAZ) dans une mémoire non-volatile (16).

9. Pneumatique, roue ou ensemble selon l'une des revendications 7 et 8, dans lequel les moyens de comptage comportent au moins un composant fusible destiné à être grillé lors d'une remise à zéro.

10. Pneumatique, roue ou ensemble selon la revendication 9, dans lequel ledit dispositif est rendu inutilisable lorsque le dernier composant fusible est grillé.

11. Pneumatique, roue ou ensemble selon l'une des revendications 7 à 10, dans lequel, le dispositif comprenant des moyens d'émission de données (12, 14), les moyens d'émission sont aptes à émettre une information (NbRAZ) relative au nombre de remises à zéro.

12. Pneumatique, roue ou ensemble selon l'une des revendications 2 à 9, comportant des moyens d'initialisation du dispositif aptes à remettre à zéro le moyen de mémorisation audit instant prédéterminé.

13. Pneumatique, roue ou ensemble selon la revendication 12, dans lequel les moyens d'initialisation sont aptes à mémoriser un code prédéterminé (CODE) dans une première partie d'une mémoire vive.

14. Pneumatique, roue ou ensemble selon la revendication 13, dans lequel une seconde partie de la mémoire vive forme le moyen de mémorisation.

15. Pneumatique, roue ou ensemble selon la revendication 14, dans lequel les moyens pour assurer l'absence de remise à zéro comprennent des moyens de vérification de la présence du code prédéterminé dans la première partie de la mémoire vive.

16. Pneumatique, roue ou ensemble selon la revendication 15, dans lequel des moyens d'émission de l'information de comptage sont aptes à émettre cette information seulement en cas de vérification positive par les moyens de vérification.

17. Utilisation pour l'équipement et la caractérisation d'un pneumatique, d'une roue ou d'un ensemble pneumatique et roue d'un dispositif électronique de comptage du nombre de rotations d'un objet dans un référentiel, dans lequel un moyen de mémorisation (10) du dispositif de comptage retient une information de comptage (NbRot) destinée à représenter le nombre de rotations comptées à chaque instant, ledit dispositif de comptage étant **caractérisé en ce qu'**il comporte des moyens pour assurer l'absence de remise à zéro du moyen de mémorisation depuis un instant prédéterminé et ainsi assurer que l'information de comptage (NbRot) est représentative du nombre de rotations comptées depuis l'instant prédéterminé.

**Claims**

1. Tyre, wheel or tyre and wheel assembly equipped with an electronic device for counting the number of rotations, in which a storage means (10) holds counting information (NbRot) intended to represent the number of rotations counted at each moment, **characterised by** means for ensuring the absence of zeroing of the storage means from a predetermined time and thus ensuring that the counting information (NbRot) represents the number of rotations counted from the predetermined time.

2. Tyre, wheel or assembly according to claim 1, in which the means for ensuring the absence of zeroing comprise means of conditional zeroing of the storage means.

3. Tyre, wheel or assembly according to claim 2, in which, the device comprising means of receiving (26) a request to send data transmitted by the external device able to communicate with the said electronic counting device, the said request intended to produce a zeroing of the said device is encrypted and the encrypting key is placed in the said external device.

4. Tyre, wheel or assembly according to one of claims 2 and 3, in which the said conditional zeroing means are able to zero the storage means if and only if at least two distinct conditions are fulfilled.

5. Tyre, wheel or assembly according to claim 4, in which, the device comprises means (26) of receiving a request to send data, a first one of the said conditions consists of the reception of the said request.

6. Tyre, wheel or assembly according to one of claims 4 and 5, in which, the device comprising a microcircuit (10), a second one of the said conditions consists of a predetermined voltage on a pin (18) of the microcircuit (10).

7. Tyre, wheel or assembly according to one of claims 2 to 6, in which the means for ensuring the absence of zeroing comprise means of counting the number of zeroings (NbRAZ) of the storage means.

8. Tyre, wheel or assembly according to claim 7, in which the counting means are able to store the number of zeroings (NbRAZ) in a non-volatile memory (16).

9. Tyre, wheel or assembly according to one of claims 7 and 8, in which the counting means comprise at least one fusible component intended to be blown at the time of a zeroing.

10. Tyre, wheel or assembly according to claim 9, in which the said device is made unusable when the last fusible component is blown.

11. Tyre, wheel or assembly according to one of claims 7 to 10, in which, the device comprising data transmission means (12, 14), the transmission means are able to transmit information (NbRAZ) relating to the number of zeroings.

12. Tyre, wheel or assembly according to one of claims 2 to 9, comprising means of initialising the device able to zero the storage means at the predetermined time.

13. Tyre, wheel or assembly according to claim 12, in which the initialisation means are able to store a predetermined code (CODE) in a first part of a random access memory.

14. Tyre, wheel or assembly according to claim 13, in which the second part of the random access memory forms the storage means.

15. Tyre, wheel or assembly according to claim 14, in which the means for showing the absence of zeroing comprise means of verifying the presence of the predetermined code in the first part of the random access memory.

16. Tyre, wheel or assembly according to claim 15, in which the means of transmitting the counting information are able to send this information only in the case of positive verification by the verification means.

17. Use, for equipping and characterising a tyre, wheel or tyre and wheel assembly of an electronic device for counting the number of rotations of an object in a reference frame, in which a storage means (10) of the counting device holds counting information (NbRot) intended to represent the number of rotations counted at each moment, said counting device being **characterised in that** it comprises means for ensuring the absence of zeroing of the storage means from a predetermined time and thus ensuring that the counting information (NbRot) represents the number of rotations counted since the predetermined time.

**Patentansprüche**

1. Luftreifen, Rad, oder Einheit aus Luftreifen und Rad, die mit einer elektronischen Vorrichtung zur Zählung der Anzahl von Umdrehungen ausgestattet sind, wobei eine Speichereinrichtung (10) eine Zählinformation (NbRot) speichert, die dazu bestimmt ist, jederzeit die Anzahl von gezählten Umdrehungen darzustellen, **gekennzeichnet durch** Einrichtungen, um die Abwesenheit einer Nullrückstellung der Speichereinrichtung seit einem vorbestimmten Zeitpunkt zu gewährleisten, um zu gewährleisten, dass die Zählinformation (NbRot) für die Anzahl von Umdrehungen repräsentativ ist, die seit dem vorbestimmten Zeitpunkt gezählt wurden.

2. Luftreifen, Rad oder Einheit nach Anspruch 1, wobei die Einrichtungen zur Gewährleistung der Abwesenheit einer Nullrückstellung Einrichtungen zur bedingten Nullrückstellung der Speichereinrichtung enthalten.

3. Luftreifen, Rad oder Einheit nach Anspruch 2, wobei, da die Vorrichtung Empfangseinrichtungen (26) einer Datensendeanforderung enthält, die von einer externen Vorrichtung gesendet wird, die mit der elektronischen Zählvorrichtung kommunizieren kann, die Anforderung, die dazu bestimmt ist, eine Nullrückstellung der Vorrichtung zu erzeugen, verschlüsselt ist, und der Verschlüsselungsschlüssel in der externen Vorrichtung angeordnet ist.

4. Luftreifen, Rad oder Einheit nach einem der Ansprüche 2 und 3, wobei die Einrichtungen zur bedingten Nullrückstellung die Speichereinrichtung auf Null zurückstellen können, wenn und nur wenn mindestens zwei unterschiedliche Bedingungen erfüllt sind.

5. Luftreifen, Rad oder Einheit nach Anspruch 4, wobei, da die Vorrichtung Empfangseinrichtungen (26) einer Datensendeanforderung enthält, eine erste der Bedingungen aus dem Empfang dieser Anforderung besteht.

6. Luftreifen, Rad oder Einheit nach einem der Ansprüche 4 und 5, wobei, da die Vorrichtung eine Mikroschaltung (10) enthält, eine zweite der Bedingungen im Anlegen einer vorbestimmten Spannung an eine Klemme (18) der Mikroschaltung (10) besteht.

7. Luftreifen, Rad oder Einheit nach einem der Ansprüche 2 bis 6, wobei die Einrichtungen zur Gewährleistung der Abwesenheit einer Nullrückstellung Zähleinrichtungen der Anzahl von Nullrückstellungen (NbRAZ) der Speichereinrichtung enthalten.

8. Luftreifen, Rad oder Einheit nach Anspruch 7, wobei die Zähleinrichtungen die Anzahl von Nullrückstellungen (NbRAZ) in einem nichtflüchtigen Speicher (16) speichern können.

9. Luftreifen, Rad oder Einheit nach einem der Ansprüche 7 und 8, wobei die Zähleinrichtungen mindestens ein schmelzbares Bauteil enthalten, das dazu bestimmt ist, bei einer Nullrückstellung durchzubrennen.

10. Luftreifen, Rad oder Einheit nach Anspruch 9, wobei die Vorrichtung unbrauchbar gemacht wird, wenn das letzte schmelzbare Bauteil durchgebrannt ist.

11. Luftreifen, Rad oder Einheit nach einem der Ansprüche 7 bis 10, wobei, da die Vorrichtung Datensendeeinrichtungen (12, 14) enthält, die Sendeeinrichtungen eine Information (NbRAZ) bezüglich der Anzahl von Nullrückstellungen senden können.

12. Luftreifen, Rad oder Einheit nach einem der Ansprüche 2 bis 9, die Einrichtungen zur Initialisierung der Vorrichtung enthalten, die die Speichereinrichtung zum vorbestimmten Zeitpunkt auf Null zurückstellen können.

13. Luftreifen, Rad oder Einheit nach Anspruch 12, wobei die Initialisierungseinrichtungen einen vorbestimmten Code (CODE) in einem ersten Teil eines Arbeitsspeichers speichern können.

14. Luftreifen, Rad oder Einheit nach Anspruch 13, wobei ein zweiter Teil des Arbeitsspeichers die Speichereinrichtung formt.

15. Luftreifen, Rad oder Einheit nach Anspruch 14, wobei die Einrichtungen, um die Abwesenheit einer Nullrückstellung zu gewährleisten, Einrichtungen zur Überprüfung der Anwesenheit des vorbestimmten Codes im ersten Teil des Arbeitsspeichers enthalten.

16. Luftreifen, Rad oder Einheit nach Anspruch 15, wobei Sendeeinrichtungen der Zählinformation diese Information nur im Fall einer positiven Überprüfung durch die Prüfeinrichtungen senden können.

17. Verwendung, zur Ausrüstung und Kennzeichnung eines Luftreifens, eines Rads oder einer Einheit aus Luftreifen und Rad, einer elektronischen Zähleinrichtung der Anzahl von Umdrehungen eines Objekts in einem Bezugssystem, wobei eine Speichereinrichtung (10) der Zählvorrichtung eine Zählinformation (NbRot) speichert, die dazu bestimmt ist, jederzeit die Anzahl von gezählten Umdrehungen darzustellen, wobei die Zählvorrichtung **dadurch gekennzeichnet ist, dass** sie Einrichtungen aufweist, um die Abwesenheit einer Nullrückstellung der Speichereinrichtung seit einem vorbestimmten Zeitpunkt zu gewährleisten, und so zu gewährleisten, dass die Zählinformation (NbRot) für die Anzahl von seit dem vorbestimmten Zeitpunkt gezählten Umdrehungen repräsentativ ist.

**Fig. 1**

**Fig. 2**

Amplitude

RFG

Bande passante utile

0,9          9          F (Hz)

**Fig. 3**

20                                         22

CODE

2

10

µC

NbRAZ

16

EEPROM          14

23

25

26
27

24

NbRAZ
NbRot

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004110793 A
- WO 2007003766 A

- BR 1632 A